# EUROPÄISCHE PATENTSCHRIFT

(11) **EP 1 488 941 B1**
(45) Veröffentlichungstag und Bekanntmachung des Hinweises auf die Patenterteilung: **03.06.2009**
(21) Anmeldenummer: 04102810.1
(22) Anmeldetag: 18.06.2004
(51) Int. Cl.: B60C 23/00

(54) **Luftdichte, koaxiale Radnabe zum Regulieren des internen Reifendrucks während der Fahrt**
Airtight coaxial hub to regulate the internal pressure of tyres even when the vehicle is riding
Moyeu coaxial étanche a l'air pour la régulation de la pression interne des pneus, même lorsque le véhicule est en marche

(30) Priorität: 20.06.2003 DE 10327650
(43) Veröffentlichungstag der Anmeldung: 22.12.2004
(73) Patentinhaber: DEERE & COMPANY, Moline, Illinois 61265-8098 (US)
(72) Erfinder: Tarasinski, Nicolai, 67227, Frankenthal (DE); Kneer, Bernd, 68519, Viernheim (DE); Jungmann, Hans-Christian, 69469, Weinheim (DE)
(74) Vertreter: Holst, Sönke

(56) Entgegenhaltungen:
- DE-C1- 19 950 191
- US-A- 4 431 043

## Beschreibung

Die Erfindung betrifft eine Achsanordnung mit einem feststehenden Achsgehäuse, einem im Achsgehäuse gelagerten rotierenden Achskörper und einer den Achskörper umgebenden ersten Kammer, wobei die erste Kammer eine mit dem Achskörper rotierende Begrenzungswand mit einer Drehdurchführung aufweist.

Landwirtschaftliche Fahrzeuge werden oft mit Reifendruckregelanlagen ausgestattet, durch die der Reifendruck während der Fahrt bei Feldarbeiten zur Gewährleistung eines niedrigeren Bodendrucks verringert und bei Straßenfahrten wieder erhöht werden kann. Des Weiteren kann dadurch auch der Reifendruck an unterschiedliche Belastungszustände angepasst werden. Bei landwirtschaftlichen Fahrzeugen wird dabei zur Befüllung des Reifens Druckluft über eine in der Achsanordnung enthaltenen Drehdurchführung zu den Rädern geführt.

Die DE 199 50 191 C1 offenbart eine gattungsgemäße Reifendruckregelanlage mit einer Drehdurchführung zur Übertragung eines Druckmittels von einem gegenüber einem drehbar gelagerten Rad feststehenden Teil des Fahrzeugs auf das drehbar gelagerte Rad. Die Drehdurchführung weist wenigstens eine Kammer auf, welche durch einen statorseitig und durch einen rotorseitig konzentrisch zur Drehachse des Rades angeordneten Ringkörper begrenzt ist. Zur Abdichtung der Kammer sind zwischen dem statorseitigen und dem rotorseitigen Ringkörper über eine Steuerleitung steuerbare Dichtringe eingesetzt. Der statorseitige Ringkörper und der rotorseitige Ringkörper sind bezogen auf die Drehachse des Rades nebeneinanderliegend angeordnet, wobei zwischen den Ringkörpern ein Bewegungsspalt belassen ist. In die zum rotorseitigen Ringkörper weisende Fläche des statorseitigen Ringkörpers sind konzentrische mit den Dichtringen bestückte Ringnuten zur radialen Abdichtung der Kammer eingebracht, wobei die Ringnuten mit ihrem von dem rotorseitigen Ringkörper wegweisenden Abschluss an die mit einem Druckmittel beaufschlagte Steuerleitung angeschlossen sind. Über einen Steuerdruck in den Ringnuten können die Dichtringe in Richtung zum rotorseitigen Ringkörper hin bewegt werden, wodurch eine geschlossene Verbindung zu einer in die Kammer mündende Abgangsleitung geschaffen wird. Nachteilig wirkt sich bei dieser Reifendruckregelanlage aus, dass die Ringkörper über an den Seiten angeordnete Führungsbänder gehalten werden und die Drehdurchführung aufgrund der stetigen Relativbewegung zwischen Ringkörper und Führungsbänder einen hohen Verschleiß aufweist. Des Weiteren ist mit der in der DE 199 50 191 C1 offenbarten Reifendruckregelanlage nur ein kleiner Öffnungsquerschnitt der Drehdurchführung und damit auch nur ein geringer Druckluftvolumenstrom realisierbar, wodurch relativ lange Befüllungszeiten entstehen. Mit längeren Befüllungszeiten sind auch die Dichtringe einem relativ hohen Verschleiß ausgesetzt, wodurch kurze Wartungsintervalle entstehen können. Ferner weist das in dieser Reifendruckregelanlage angewandte Ringnutverfahren einen hohen Fertigungs- und Kostenaufwand auf.

Die der Erfindung zugrunde liegende Aufgabe wird darin gesehen, eine für eine Reifendruckregelanlage geeignete Achsanordnung der eingangs genannten Art anzugeben, durch welches die vorgenannten Probleme überwunden werden. Insbesondere soll die Achsanordnung eine Drehdurchführung enthalten, die einen geringen Verschleiß aufweist und mit der hohe Druckluftvolumenströme und damit verbunden kurze Befüllungszeiten erzielbar sind.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Achsanordnung der eingangs genannten Art mit einer Drehdurchführung versehen, welche einen am Achskörper konzentrisch fixierten Kranz und eine sich radial über den Kranz hinaus erstreckende und den Kranz konzentrisch überlappende Ringscheibe enthält, so dass sich ein radial ausgerichteter ringförmiger Überlappungsbereich ergibt. Die Ringscheibe ist axial verschiebbar, so dass im Überlappungsbereich zwischen Kranz und Ringscheibe ein Öffnungsquerschnitt herstellbar ist. Im geschlossenen Zustand der Drehdurchführung findet kein Kontakt zwischen der rotierenden Begrenzungswand der ersten Kammer und den feststehenden Teilen am Achsgehäuse statt, wodurch eine berührungslose und damit verschleißarme Drehdurchführung realisiert wird. Des Weiteren wird durch die Öffnung des Überlappungsbereichs zwischen Kranz und Ringscheibe ein relativ großer Öffnungsquerschnitt geschaffen, der hohe Druckluftvolumenströme ermöglicht und damit geringe Befüllungszeiten zulässt.

Vorzugsweise wird der Kranz in Verbindung mit einer Dichtscheibe auf den Schaft des Achskörpers aufgesetzt und ist durch eine Presspassung fixiert. Denkbar ist hierbei auch, dass der Schaft des Achskörpers in diesem Bereich mit einem Absatz und einem Gewinde versehen ist, so dass der Kranz aufgeschraubt werden kann. Auch andere Lösungen, wie z. B. die Sicherung des Kranzes durch einen Sicherungsring oder auch die Verschraubung unter Zuhilfenahme von dafür vorgesehenen Bohrungen ist denkbar.

Zur axialen Führung und Zentrierung der Ringscheibe sind an der auf der Innenseite der Kammer gelegenen Seite des Kranzes im Überlappungsbereich Führungsstifte vorgesehen, mit dem die Ringscheibe durch im Überlappungsbereich ausgebildete Bohrungen oder Nuten axial geführt und konzentrisch zum Achskörper gehalten wird. Hierbei sind auch andere Führungsmechanismen denkbar, die eine axiale Führung der Ringscheibe und die Realisierung eines Öffnungsquerschnitts im Überlappungsbereichs ermöglichen. Beispielsweise kann der Kranz mit einem Absatz versehen sein, der den Innenradius der Ringscheibe aufnimmt und die Ringscheibe axial führt. Ein Öffnungsquerschnitt könnte dann durch axial ausgerichtete Nuten an der Seitenwand des Absatzes hergestellt werden.

In einer besonders bevorzugten Ausgestaltung der Erfindung ist am Achsgehäuse ein in axialer Richtung zum Achskörper ausfahrbarer Ringkolben befestigt. Auf dem Ringkolben ist ein drehbar gelagerter Drehring angeordnet, so dass durch Aktivierung des Ringkolbens der Drehring auf die Ringscheibe aufsetzbar und die axiale Verschiebung der Ringscheibe herstellbar ist. Im nicht aktivierten Zustand des Ringkolbens ist der Drehring berührungslos zur Ringscheibe angeordnet. Der Ringkolben ist derart angeordnet, dass ein Bewegungsspalt zwischen Drehring und Ringscheibe im nicht aktivierten Zustand des Ringkolbens eingehalten wird. Erst durch das axiale Ausfahren des Ringkolbens wird der Drehring auf die Ringscheibe gepresst und eine axiale Kraft auf die Ringscheibe ausgeübt. Der Drehring ist über eine Kugellagerung relativ zum Ringkolben drehbar gelagert. Zu diesem Zweck kann jeweils am Drehring und am Ringkolben eine radial zum Achskörper ausgebildete Ringnut angeordnet sein, die mehrere auf den Umfang verteilte Lagerkugeln aufnimmt, so dass ein an den Ringkolben angepasstes Axialkugellager entsteht, welches Kräfte in axialer Richtung aufnehmen kann und durch das der Drehring drehbar zum Ringkolben gelagert ist.

In einer weiteren besonders bevorzugten Ausgestaltung der Erfindung sind Anpressmittel enthalten welche die Ringscheibe derart an den Kranz drücken, dass der Ringkolben im aktivierten Zustand entgegen der Anpresskraft des Anpressmittels wirkt. Durch die auf die Ringscheibe wirkende Anpresskraft wird gewährleistet, dass die Ringscheibe im nicht aktiviertem Zustand des Ringkolbens auf den Kranz gepresst wird und die erste Kammer verschlossen hält. Erst wenn der Ringkolben aktiviert wird und gegen die Ringscheibe drückt, wird ein Öffnungsquerschnitt zur ersten Kammer geschaffen, indem sich die Ringscheibe von dem Kranz löst und ein Öffnungsringspalt zwischen Kranz und Ringscheibe hergestellt wird. Sobald der entgegen der Anpresskraft des Anpressmittels wirkende Ringkolben deaktiviert wird, schließt sich der Öffnungsquerschnitt zwischen Kranz und Ringscheibe, indem die Ringscheibe wieder durch die Anpresskraft auf den Kranz gepresst wird.

In einer weiteren besonders bevorzugten Ausgestaltung der Erfindung wird durch die Außenwand des Achsgehäuses, durch die Innenwände des Ringkolbens und des Drehrings, sowie durch den Kranz und die Ringscheibe eine zweite Kammer begrenzt, wobei die erste Kammer und die zweite Kammer durch axiale Verschiebung der Ringscheibe miteinander verbindbar sind. Aufgrund des zwischen Drehring und Ringscheibe belassenen Bewegungsspalts, ist die zweite Kammer durch ihre Begrenzung nicht vollständig geschlossen. Wird jedoch der Drehring durch Aktivierung des Ringkolbens auf die Ringscheibe gedrückt, so entsteht über den sich zwischen Ringscheibe und Kranz bildenden Öffnungsquerschnitt, eine Verbindung zwischen der ersten Kammer und der zweiten Kammer. In diesem Zustand ist sowohl die erste Kammer über die Begrenzung der zweiten Kammer als auch die zweite Kammer über die Begrenzung der ersten Kammer gegenüber der Umgebung außerhalb der Achsanordnung verschlossen. Bei Deaktivierung des Ringkolbens schließt sich der Öffnungsquerschnitt zwischen Ringscheibe und Kranz, die Verbindung zwischen erster Kammer und zweiter Kammer wird unterbrochen und der Bewegungsspalt zwischen Ringscheibe und Drehring wird wieder hergestellt, so dass die zweite Kammer nicht mehr vollständig geschlossen ist.

In einer weiteren besonders bevorzugten Ausgestaltung der Erfindung ist der Ringkolben mit einer Rückstellfeder verbunden. Die Rückstellfeder bewirkt, dass der Ringkolben und der daran gelagerte Drehring bei Deaktivierung des Ringkolbens in eine Ausgangsstellung derart zurückbewegt wird, dass sich zwischen Ringscheibe und Drehring der Bewegungsspalt einstellen kann und im deaktivierten Zustand des Ringkolbens eine berührungslose Drehdurchführung geschaffen wird. Anstelle der Rückstellfeder könnte der Ringkolben auch mit einem doppeltwirkenden Zylinder versehen sein, so dass Stellkräfte in beide axiale Richtungen des Ringkolbens wirken können und der Ringkolben sowohl ausgefahren als auch eingefahren werden kann.

In einer weiteren besonders bevorzugten Ausgestaltung der Erfindung ist zwischen Kranz und Ringscheibe ein erster Dichtring und zwischen Ringscheibe und Drehring ein zweiter Dichtring angeordnet. Der erste Dichtring gewährleistet, dass die erste Kammer im geschlossenen Zustand gegenüber der Umgebung luftdicht verschlossen ist. Dazu wird vorzugsweise ein O-Ring-förmiger Dichtring verwendet, der sich aufgrund der Anpresskraft derart verformt, dass keine Luft zwischen Ringscheibe und Kranz hindurchströmt. Auf gleiche Weise sorgt der zweite Dichtring dafür, dass im geöffneten Zustand der ersten Kammer eine luftdichte Verbindung zwischen Drehring und Ringscheibe hergestellt wird.

In einer weiteren besonders bevorzugten Ausgestaltung der Erfindung ist zwischen Drehring und Ringkolben ein dritter Dichtring angeordnet ist, der den am Ringkolben drehbar gelagerten Drehring gegenüber dem Ringkolben abdichtet. Da der Drehring gegenüber dem Ringkolben drehbar gelagert ist, ist zwischen Drehring und Ringkolben ein funktional bedingter Bewegungsspalt vorhanden, der zur Abdichtung der zweiten Kammer gegenüber der außerhalb der Achsanordnung gelegenen Umgebung mit einem Dichtring versehen wird. Vorzugsweise wird dieser Dichtring radial zwischen der Außenwand des Ringkolbens und der Innenwand des Drehrings angeordnet. Aufgrund der sich einstellenden Relativbewegungen zwischen Drehring und Ringkolben im aktivierten Zustand des Ringkolbens ist der Dichtring derart ausgebildet, dass er auch Radialbewegungen ausgesetzt werden kann.

In einer weiteren besonders bevorzugten Ausgestaltung der Erfindung enthält der Ringkolben eine Druckluftzuführöffnung für eine Druckluftzufuhr zur zweiten Kammer. Die Druckluftzufuhröffnung ist an der Außenseite des Ringkolbens vorgesehen und verbindet die Innenseite des Ringkolbens und damit die zweite Kammer mit einer Druckluftanlage. Über die Druckluftzuführöffnung kann Druckluft in die zweite Kammer hinein bzw. aus der zweiten Kammer heraus geführt werden. Für den Fall, dass der Ringkolben aktiviert, der Drehring auf die Ringscheibe gedrückt und eine Verbindung zwischen der zweiten und der ersten Kammer hergestellt wird, kann über die Druckluftzuführöffnung und über die zweite Kammer die erste Kammer mit Druckluft versorgt werden bzw. Druckluft aus der ersten Kammer abgeführt werden. Während dieses Befüllungszustandes dichtet der zweite Dichtring zwischen Drehring und Ringscheibe die erste Kammer und die zweite Kammer luftdicht gegenüber der außerhalb der Achsanordnung gelegenen Umgebung ab. Die Druckluftzuführöffnung ist mit einer üblichen Reifendruckregelanlage verbunden, welche zur Regulierung des in der ersten Kammer vorherrschenden Luftdrucks vorgesehenen ist. Über die Regulierung des in der ersten Kammer vorherrschenden Luftdrucks kann in vorteilhafter Weise der Reifendruck eines sich an der Achsanordnung befindlichen Reifens reguliert werden.

In einer besonders bevorzugten Ausgestaltung der Erfindung ist der Drehring über eine Manschette in axialer Richtung an den Ringkolben fixiert. Dazu wird eine an die Außenkonturen des Ringkolbens und des Drehrings angepasste Manschette über die Außenwandungen des Ringkolbens und des Drehrings geschoben, wobei der Drehring fest mit der Manschette verbunden, vorzugsweise verschraubt wird und der Ringkolben an seiner Außenseite einen Absatz zur Sicherung der Manschette gegen axiales Verschieben aufweist. Des Weiteren ist an der Innenseite der Manschette eine Filzringdichtung vorgesehen, die das Eindringen von Verunreinigungen in den Bewegungsspalt zwischen Manschette und Ringkolben verhindert. Durch den an der Außenseite des Ringkolbens vorgesehenen Absatz wird die Manschette und der damit verschraubte Drehring bei der durch die Rückstellfeder hervorgerufenen Rückstellbewegung des Ringkolbens ebenfalls zurückbewegt, so dass nach jeder Deaktivierung des Ringkolbens die Wiederherstellung des Bewegungsspalts zwischen Drehring und Ringsscheibe gewährleistet wird. Die Ausbildung der Manschette erlaubt eine Relativbewegung zwischen Drehring und Ringkolben.

In einer besonders bevorzugten Ausgestaltung der Erfindung ist die erste Kammer in radialer Richtung durch einen Faltenbalg begrenzt, welcher zwischen der Ringscheibe und einer durch die Anpresskraft des Anpressmittels an den Achskörper gepressten Balganschlussscheibe angeordnet ist. Durch den Faltenbalg wird eine radiale Begrenzungswand für die erste Kammer geschaffen, die sowohl axial als auch radial flexibel ist und sich dadurch besonders vorteilhaft an die Druckverhältnisse und Volumenverhältnisse in der ersten Kammer anpassen kann. Des Weiteren bietet die Balganordnung den Vorteil, dass auf aufwendige Abdichtungsvorkehrungen verzichtet werden kann. Ein an der Balganschlussscheibe angeordneter O-Ring dichtet die erste Kammer an der Verbindungsstelle zwischen Faltenbalg bzw. Balganschlussscheibe und Achskörper ab. Der Faltenbalg ist vorzugsweise derart ausgelegt, dass er durch eine formbedingte Vorspannung zwischen der Ringscheibe und der Balganschlussscheibe eingespannt wird und durch seine Vorspannkraft sich selbst an den Kontaktstellen zur Ringscheibe und zur Balganschlussscheibe abdichtet.

In einer besonders bevorzugten Ausgestaltung der Erfindung ist die Begrenzungswand der erste Kammer im Wesentlichen durch den Kranz, durch die Ringscheibe, durch den Faltenbalg, durch die Balganschlussscheibe und durch den Achskörper ausgebildet. Dadurch wird mit wenigen Dichtelementen ein rotierender, luftdicht abschließender Raum geschaffen, der durch axiale Verschiebung der Ringscheibe und einem damit verbundenen Zusammendrücken des Faltenbalgs auf einfache Weise geöffnet werden kann. Die Realisierung des Öffnungsquerschnitts zwischen der rotierenden ersten Kammer und der gegenüber der ersten Kammer feststehenden zweiten Kammer stellt hierbei die Grundlage für weitere Maßnahmen zur regelbaren Befüllung eines Reifens dar.

In einer besonders bevorzugten Ausgestaltung der Erfindung ist wenigstens ein aus der ersten Kammer durch den Achskörper verlaufender Verbindungskanal enthalten, welcher in eine Vertiefung in einem Achskörperendbereich mündet. Der Verbindungskanal bildet dabei die eigentliche Verbindung zwischen einer am Achskörper befestigbaren Radfelge und der ersten Kammer. Vorzugsweise sind neben dem wenigstens einen Verbindungskanal weitere auf dem Umfang des Achsgehäuses verteilte Verbindungskanäle enthalten, die in die Vertiefung münden. Dadurch wird gewährleistet, dass hohe Druckluftvolumenströme realisierbar sind und die Vertiefung als eine Art Sammelanschlussstelle mehrerer Verbindungskanäle dient. Eine Verbindung von der Radfelge zu den Verbindungskanälen ist durch eine derartige Vertiefung am Achskörper besonders einfach realisierbar.

In einer besonders bevorzugten Ausgestaltung der Erfindung ist am Achskörperendbereich ein mit einer Dichtung versehener Achsdeckel ausgebildet, durch welchen die Vertiefung in dem Achskörperendbereich luftdicht abdeckbar ist. Der Achsdeckel wird dabei vorzugsweise mit dem Achskörper verschraubt, wobei ein als O-Ring ausgebildeter Dichtring zwischen die axial ausgebildeten Anschlussflächen des Achsdeckels und des Achskörpers angeordnet ist.

In einer besonders bevorzugten Ausgestaltung der Erfindung sind außerhalb des Achsdeckels am Achskörperendbereich Bohrungen für den Anschluss einer Radfelge enthalten. Des Weiteren ist an dem Achsdeckel eine Anschlussstelle für den Anschluss einer in die Vertiefung mündenden Verbindungsleitung zwischen Achsdeckel und Radfelge ausgebildet. Auf diese Weise kann über die Verbindungsleitung Druckluft zu einem sich auf der Radfelge befindlichen Reifen gelangen. Bei der Verbindungsleitung kann es sich um eine einfache Schlauchverbindung oder eine Rohrverbindung handeln, die mit entsprechenden Anschlussmitteln an dafür vorgesehene Anschlussstellen an der Radfelge bzw. am Achsdeckel befestigt sind. Bei Aktivierung des Ringkolbens kann somit Druckluft über die Druckluftzuführöffnung am Ringkolben in die zweite Kammer, durch den Öffnungsquerschnitt von der zweiten Kammer in die erste Kammer, von der ersten Kammer durch die Verbindungskanäle in die Vertiefung des Achskörpers und von dort aus durch die Anschlussstelle am Achsdeckel über die Verbindungsleitung in die Radfelge bzw. in die Reifenkammer gelangen.

In einer besonders bevorzugten Ausgestaltung der Erfindung ist das Anpressmittel eine Druckfeder, welche zwischen der Ringscheibe und der Balganschlussscheibe einspannbar ist. Dadurch wird auf einfache Weise gewährleistet, dass die Ringscheibe und die Balganschlussscheibe stets an den Kranz bzw. an den Achskörper gepresst werden, so dass ausreichend hohe Anpresskräfte für die Dichtringe zur luftdichten Abdichtung der ersten Kammer vorliegen. Anstelle einer Druckfeder könnten auch gebogene Blechstreifen oder Blattfedern vorgesehen werden, die eine entsprechend hohe Vorspannung des Faltenbalgs erzeugen. Derartige Blechstreifen oder Blattfedern könnten dann an der Innenseite des Faltenbalgs angeordnet werden, so dass zusätzlich zu der durch die Wölbung des Faltenbalgs verursachten Vorspannung eine durch die Biegung von Federblech hervorgerufene Vorspannung wirksam wird. Es sind aber auch eine Vielzahl anderer Federungsmechanismen denkbar, die eine Anpresskraft der Ringscheibe an den Kranz hervorrufen.

In einer weiteren bevorzugten Ausgestaltung der Erfindung ist das Anpressmittel ein in der ersten Kammer wirkender Luftdruck. Die Anpresskraft wird hierbei durch den in der ersten Kammer wirkenden Luftdruck erzeugt. Bei ausreichend hohem Luftdruck in der ersten Kammer kann auf diese Weise die zur Abdichtung erforderliche Anpresskraft erzeugt werden. In günstigen Fällen kann auf eine Feder zur Erzeugung der Anpresskraft verzichtet werden oder diese zumindest kleiner ausgelegt werden. Vorzugsweise sind die Druckluftzustände in der ersten Kammer jedoch derart ausgelegt, dass auf den Einsatz einer Feder verzichtet werden kann.

In einer besonders bevorzugten Ausgestaltung der Erfindung ist der Ringkolben hydraulisch ansteuerbar. Dadurch wird bei Vorhandensein einer Hydraulikanlage eine kompakte Bauweise des Ringkolbens ermöglicht, da aufgrund eines hohen Betriebsdrucks von Hydraulikanlagen kleine Kolbenflächen in der Ringkolbendruckkammer ausreichend sind. Denkbar ist jedoch auch die Aktivierung des Ringkolbens durch Luftdruck. Dies würde jedoch aufgrund eines geringeren Betriebsdrucks auch zu größeren Bauweisen des Ringkolbens führen. Ferner ist auch die Aktivierung auf mechanischem bzw. elektromechanischem Wege, insbesondere durch einen Elektromotor denkbar. Die Hydraulikanlage bzw. der zur Aktivierung des Ringkolbens verwendete Aufbau wird dabei vorzugsweise durch eine in einer Reifendruckregelanlage implementierten Steuereinheit angesteuert.

In einer besonders bevorzugten Ausgestaltung der Erfindung ist die Druckluftzuführöffnung mit einer Reifendruckregelanlage verbunden. Die Reifendruckregelanlage enthält dabei vorzugsweise eine Steuereinheit oder ist mit einer Steuereinheit verbunden, über welche sich auch eine Hydraulikanlage zur Aktivierung des Ringkolbens ansteuern lässt. Durch Vorgabe von Reifendrucksollwerten für unterschiedliche Betriebszustände (Straßenfahrt, Feldbetrieb etc.) kann der Ringkolben entsprechend aktiviert und der gewünschte Luftdruck im Reifen, bzw. in der ersten Kammer geregelt werden. Vorteilhaft ist dabei, dass aufgrund des großen Öffnungsquerschnitts zwischen Ringscheibe und Kranz sehr hohe Volumenströme erzielbar und dadurch kurze Befüllungszeiten realisierbar sind. Dies gilt gleichermaßen für das Befüllen als auch für das Entleeren eines Reifens.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Querschnittsansicht einer erfindungsgemäßen Achsanordnung mit Drehdurchführung und
- Fig. 2: eine Querschnittsansicht der Achsanordnung aus Fig.1 gemäß der Schnittebene A-A.

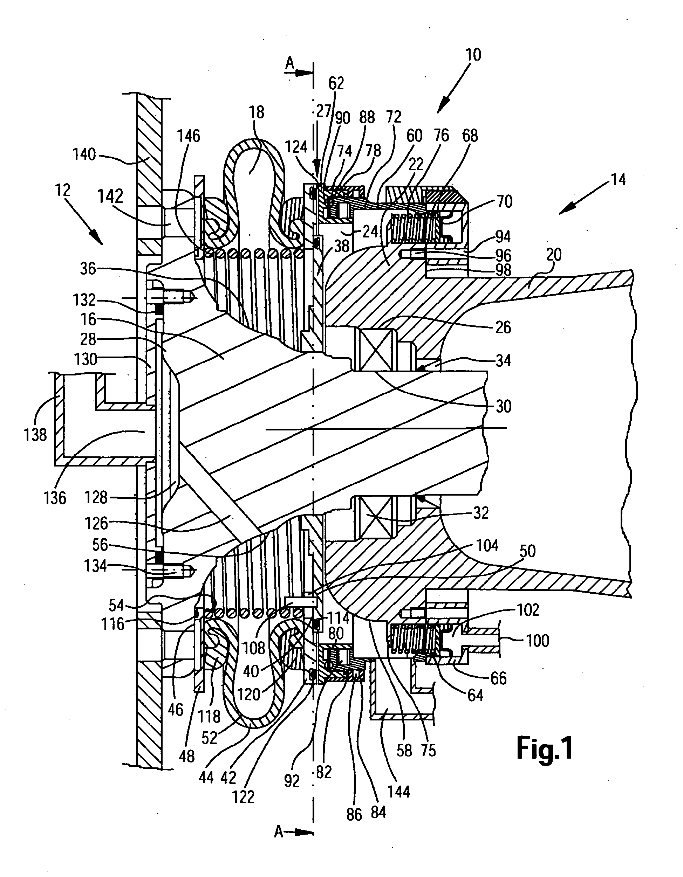

Fig. 1 zeigt eine erfindungsgemäße Achsanordnung 10 mit einem rotierenden Teil 12 und einem gegenüber dem rotierenden Teil feststehenden Teil 14, wobei der rotierende Teil 12 einen Achskörper 16 aufweist, welcher von einer ersten Kammer 18 umgeben ist und der feststehende Teil 14 ein Achsgehäuse 20 enthält, dessen Achsgehäuseendbereich 22 von einer zweiten Kammer 24 umgeben ist. Auf der Innenseite des Achsgehäuseendbereichs 22 ist ein den Achskörper 16 aufnehmendes Lagergehäuse 26 ausgebildet.

Zwischen der ersten Kammer 18 und der zweiten Kammer 24 ist eine Drehdurchführung 27 ausgebildet, die es erlaubt, bei rotierender ersten Kammer 18 und feststehender zweiten Kammer 24 einen Öffnungsquerschnitt zwischen den beiden Kammern 18, 24 herzustellen bzw. beide Kammern 18, 24 wahlweise miteinander zu verbinden oder zu schließen.

Der Achskörper 16 besitzt längs zur Rotationsachse einen trichterförmigen Querschnitt, wobei der Achskörper 16 an seinem breiten Ende einen flanschartig ausgebildeten Achskörperendbereich 28 aufweist. Quer zur Rotationsachse ist der Achskörper 16 rotationssymmetrisch aufgebaut. Der Achskörper 16 weist antriebsseitig einen Lagerbereich 30 auf, mit dem er unter Verwendung eines Achslagerbausatzes 32 in dem Lagergehäuse 26 des Achsgehäuses 20 drehbar gelagert ist. Zur Abdichtung des Lagerbereichs 30 ist das Lagergehäuse 26 mit einem Achswellendichtring 34 versehen. Die Lagerung des Achskörpers 16 im Achsgehäuse 20 erfolgt auf fahrzeugtechnisch konventionelle Art. Auf eine detaillierte Beschreibung von Einzelheiten zur Lagerung wird daher verzichtet.

Zwischen Lagerbereich 30 und Achskörperendbereich 28 ist um das Äußere des Achskörpers 16 die erste Kammer 18 ausgebildet, welche von der Außenwand 36 des Achskörpers 16, einem dichtfest mit dem Achskörper 16 verbundenen Kranz 38, einer sich in einem Überlappungsbereich 40 auf der Innenseite der ersten Kammer 18 an dem Kranz 38 abstützenden Ringscheibe 42, einem Faltenbalg 44 und eine sich an einer dem Achsgehäuse 20 zugewandten Fläche 46 des flanschartig ausgebildeten Achskörperendbereichs 28 abstützenden Balganschlussscheibe 48 begrenzt ist. Der Kranz 38 ist beispielsweise mit einer Presspassung auf den Achskörper 16 aufgeschrumpft oder aufgeschraubt. Dabei bilden der Kranz 38 zusammen mit der Ringscheibe 42 eine senkrecht zur Rotationsachse gelegene achsgehäuseseitige Begrenzungswand 50, der Faltenbalg 44 eine radial äußere Begrenzungswand 52, die Balganschlussscheibe 48 eine senkrecht zur Rotationsachse gelegene achsendseitige Begrenzungswand 54 und die Außenwand 36 des Achskörpers 16 eine radial innere Begrenzungswand 56 der ersten Kammer 18.

Die den Achsgehäuseendbereich 22 umgebende zweite Kammer 24 wird von einer Außenwand 58 des Achsgehäuseendbereichs 22, von der achsgehäuseseitigen Begrenzungswand 50 der ersten Kammer 18 sowie von der Innenseite eines Ringkolbens 60 und der Innenseite eines Drehrings 62 begrenzt.

Der Ringkolben 60 weist einen Führungsbereich 64 auf, welcher in einem Ringzylinder 66 geführt wird. Dem Führungsbereich 64 schließt sich ein Ringkolbendeckel 68 an, der eine innerhalb des Ringzylinders 66 liegende wirksame Ringkolbenfläche 70 darstellt. Ausgehend vom Führungsbereich 64 erstreckt sich eine Mantelfläche 72 des Ringkolbens 60 in Richtung der achsgehäuseseitigen Begrenzungswand 50 der ersten Kammer 18, an welche sich ein Drehringlagerbereich 74 anschließt. Der Ringkolbendeckel 68 ist fest mit dem Führungsbereich 64 bzw. mit der Mantelfläche 72 des Ringkolbens 60 verbunden. Zwischen Ringkolbendeckel 68 und einem an der Außenseite des Achsgehäuseendbereiches 22 ausgebildeten Absatz 75 ist eine als Rückstellfeder angeordnete Druckfeder 76 ausgebildet, die den Ringkolben 60 in eine eingefahrene Grundstellung zurückstellt.

Der umlaufende Randbereich des Drehrings 62 weist ein U-förmiges Profil auf und ist drehbar und spielbehaftet um die radial äußere und innere Seitenwand 78, 80 des Drehringlagerbereichs 74 gelegt. Ein radial vorstehender Ringabsatz 82 an der Seitenwand 78 des Ringkolbens 60 sorgt in Verbindung mit einer um den Drehring 62 und um die radial äußere Seitenwand 78 gelegten Manschette 84 für eine axiale Sicherung des Drehrings 62. Dabei ist die Manschette 84 an der einen Seite mit dem Drehring 62 verschraubt und stützt sich an der anderen Seite gegen den Ringabsatz 82 ab, so dass der Drehring 62 drehbar und spielbehaftet an den Ringkolben 60 bzw. an den Drehringlagerbereich 74 gekoppelt ist. Zur Abweisung von Verunreinigungen ist die Manschette 84 mit einem Filzring 86 versehen. Um die Aufnahme von axialen Kräften bei gleichzeitigen Drehbewegungen des Drehrings 62 zu gewährleisten ist sowohl die Stirnseite des Drehringlagerbereichs 74 am Ringkolben 60 als auch die Innenseite des Drehringbodens mit einer Ringnut 88, 90 versehen, die jeweils als Laufnut für mehrere auf den Umfang verteilte Lagerkugeln (nicht gezeigt) dienen. Die Kombination von Drehringlagerbereich 74 und Drehring 62 in Verbindung mit den Lagerkugeln stellt somit ein Axialkugellager dar. Zwischen der radial inneren Seitenwand 80 des Drehringlagerbereichs 74 und dem Drehring 62 ist ein Dichtringsatz 92 eingearbeitet. Der Dichtringsatz 92 kann beispielsweise ein "Rotomatic" Dichtringsatz sein, der aus einem O-Ring und einem PTFE-Ring besteht. Ein derartiger Dichtringsatz 92 wird beispielsweise von der Firma Freudenberg angeboten.

Der Ringkolben 60 weist, wie bereits erwähnt, einen Führungsbereich 64 auf, der in einem Ringzylinder 66 geführt wird. Der Ringzylinder 66 wird mittels Befestigungsschrauben (nicht gezeigt) und am Ringzylinder 66 eingebrachten Befestigungsbohrungen 94 auf einen mit Gewindebohrungen 96 versehenen Anschlussabsatz 98 geschraubt und damit fest mit dem Achsgehäuseendbereich 22 verbunden. Über einen am Ringzylinder 66 vorgesehenen Hydraulikanschluss 100 kann eine Druckkammer 102 des Ringzylinders 66 zur Aktivierung des Ringkolbens 60 mit Hydraulikflüssigkeit versorgt bzw. mit einem Hydraulikflüssigkeitsdruck beaufschlagt werden. Vorzugsweise kann dazu eine bereits an einem Fahrzeug vorhandene Hydraulikanlage verwendet werden.

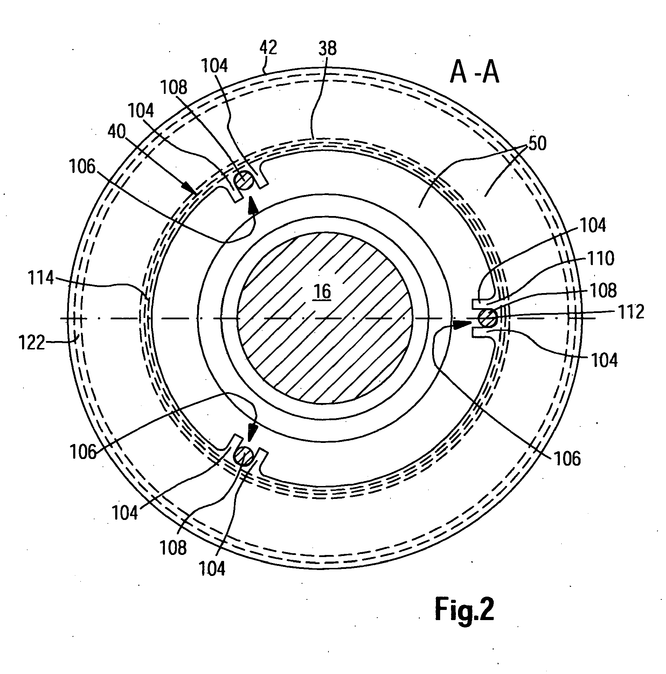

Zur Verdeutlichung der Funktionsweise der Drehdurchführung 27 wird die in Figur 2 dargestellte Schnittebene A-A gemäß Figur 1 herangezogen. Figur 2 zeigt, dass die Ringscheibe 42 an ihrem inneren Rand sich radial nach innen erstreckende Führungsnasen 104 aufweist, welche jeweils paarweise sich radial nach innen erstreckende Führungsnuten 106 bilden. Bei den in Figur 2 ausgebildeten Anwendungsbeispiel ist die Ringscheibe 42 mit drei mal zwei Führungsnasen 104 bzw. drei Führungsnuten versehen. Auf dem Kranz 38 sind zur Führung der Ringscheibe 42 sich axial erstreckende Führungsstifte 108 angeordnet, von denen einer in der Querschnittsansicht aus Figur 1 ersichtlich ist. Die Führungsstifte 108 sind an einem Ende fest mit dem Kranz 38 verbunden, beispielsweise eingeschraubt oder eingepasst, und in gleichen Abständen wie die Führungsnuten 106 auf den Umfang des Kranzes 38 angeordnet. Des Weiteren weisen die Mittelpunkte 110 der Führungsnasen 104 und die Mittelpunkte 112 der Führungsstifte 108 im Wesentlichen den gleichen Abstand zur Rotationsachse auf. Durch die in den Führungsnuten 106 geführten Führungsstifte 108 wird die Ringscheibe 42 zum einen radial auf dem Kranz fixiert, so dass sich der Kranz 38 nicht gegenüber der Ringscheibe verdrehen kann, und kann entsprechend der Länge der Führungsstifte 108 axial verschoben werden.

Um eine luftdichte Abdichtung der ersten Kammer 18 zu gewährleisten ist im Überlappungsbereich 40 ein Dichtring 114 vorgesehen, der die Ringscheibe 42 gegenüber dem Kranz 38 abdichtet. Auf der gegenüberliegenden Seite der ersten Kammer 18 ist die Balganschlussscheibe 48 mit einem gleichartigen Dichtring 116 versehen, der die Balganschlussscheibe 48 gegenüber der Fläche 46 des Achskörperendbereichs 28 luftdicht abdichtet. Des Weiteren dichtet ein am Faltenbalg 44 angeordneter Faltenbalgunterbau 118, 120 gegenüber der Ringscheibe 42 bzw. der Balganschlussscheibe 48 luftdicht ab. Ein weitere Dichtring 122 ist auf der dem Drehring 62 zugewandten Seite der Ringscheibe 42 angeordnet, der die Ringscheibe 42 gegenüber dem Drehring 62 in einem aktivierten Zustand des Ringkolbens 60 abdichtet. Der aktivierte Zustand des Ringkolbens 60 tritt ein, sobald der Ringkolben 60 durch Druckbeaufschlagung der Druckkammer 102 in axiale Richtung ausgefahren wird und den Drehring 62 auf die Ringscheibe 42 presst. Im nichtaktivierten Zustand wird der Ringkolben 62 durch die Druckfeder 76 in seine Grundstellung zurückbewegt, so dass sich wieder ein Bewegungsspalt 124 zwischen Ringscheibe 42 und Drehring 62 einstellt. Im nicht aktivierten Zustand ist folglich eine berührungslose Drehdurchführung 27 hergestellt.

Der Faltenbalg 44 der ersten Kammer 18 besitzt artbedingt eine Spannkraft, durch die sowohl die Ringscheibe 42 an den Kranz 38 als auch die Balganschlussscheibe 48 an die Fläche 46 des Achskörperendbereichs 28 gedrückt werden, so dass die an dem Kranz 38 und der Balganschlussscheibe 48 angeordneten Dichtringe 114 bzw. 116 luftdicht abdichten. Des Weiteren dichtet sich der Faltenbalg 44 mit den Faltenbalgunterbauten 118, 120 selbst durch seine Spannkraft gegenüber den Scheiben 42 und 48 luftdicht ab. Zur Verstärkung dieser Spannkraft bzw. zur Erhöhung der Abdichtwirkung kann zwischen den Scheiben 42, 48 auch eine zusätzliche Druckfeder 146 eingesetzt werden, durch welche die Scheiben verstärkt an den Kranz 38 bzw. an die Fläche 46 gedrückt werden. Eine ähnliche Wirkung kann erzielt werden, indem der Faltenbalg 44 an seiner Mantelfläche mit Federblech oder Federblechstreifen verstärkt wird, wodurch die Spannkraft erhöht werden kann. Bei dem in Figur 1 dargestellten Ausführungsbeispiel wurde zur Verstärkung der Spannkraft eine derartige Druckfeder 146, jedoch kein Federblech eingesetzt. Der Faltenbalg 44 wird lediglich zwischen die Ringscheibe 42 und die Balganschlussscheibe 48 gespannt. Durch die Spannkraft des Faltenbalgs 44 wird hierbei eine ausreichend hohe Dichtfunktion erzielt, damit die erste Kammer mit Luft befüllt bzw. mit Druckluft beaufschlagt werden kann. Durch die Befüllung der ersten Kammer nimmt auch der Druck auf den Faltenbalg 44, auf die Ringscheibe 42 und auf die Balganschlussscheibe zu, so dass der sich aufbauende Luftdruck die Abdichtfunktion von selbst erhöht.

Der Achskörper 16 ist mit einem Verbindungskanal 126 versehen, der von der ersten Kammer 18 in eine Vertiefung 128 an der Stirnseite des Achskörperendbereichs 28 mündet. Hierbei können auch mehrere auf den Umfang verteilte Verbindungskanäle 126 ausgebildet sein, die von der ersten Kammer 18 in die Vertiefung 128 münden. Die Vertiefung 128 wird von einem Achskörperdeckel 130 abgedeckt, welcher mit einem Dichtring 132 zur luftdichten Abdichtung gegenüber der Umgebung versehen ist. Der Achskörperdeckel 130 ist dabei mit mehreren auf den Umfang verteilte Schrauben (nicht gezeigt) versehen, mittels derer der Achskörperdeckel 130 in dafür vorgesehene Gewindebohrungen 134 an die Stirnseite des Achskörperendbereichs 28 befestigt wird.

Über eine am Achskörperdeckel 130 ausgebildete Anschlussstelle 136 ist der Achskörperdeckel mit einem Verbindungsrohr 138 versehen. Das Verbindungsrohr 138 verbindet dabei eine zu befüllende Reifenkammer (nicht gezeigt) eines am Achskörperendbereich 28 montierten Rades 140 mit der am Achskörperendbereich 28 ausgebildeten Vertiefung, wobei das Rad 140 mittels am Achskörperendbereich 28 ausgebildeten Bohrungen 142 montiert wird.

Zur Befüllung der Reifenkammer ist der Ringkolben 60 mit einer Druckluftzuführung 144 ausgebildet, über die Druckluft zur Befüllung der Reifenkammer in die zweite Kammer 24 geleitet wird. Durch gleichzeitige Aktivierung des Ringkolbens 60 wird die Drehdurchführung 27 betätigt, so dass die Druckluft in die erste Kammer 18 und von dort aus zur Reifenkammer gelangt.

Im Einzelnen laufen folgende Vorgänge zur Befüllung der Reifenkammer ab:

Durch hydraulische Beaufschlagung der Druckkammer 102 des Ringzylinders 66 mit Druck wird der Ringkolben 60 axial in Richtung der Drehdurchführung 27 bewegt, bis der Drehring 62 auf die Ringscheibe 42 der Drehdurchführung 27 drückt und die auf den Führungsstiften 108 geführte Ringscheibe 42 axial ins Innere der ersten Kammer 18 verschiebt. Sobald der auf dem Ringkolben 60 drehbar gelagerte Drehring 62 mit der Ringscheibe 42 in Kontakt steht, beginnt dieser sich mit der Ringscheibe 42 mitzudrehen. Durch die axiale Verschiebung der Ringscheibe 42 entsteht zwischen Kranz 38 und Ringscheibe 42 ein Öffnungsquerschnitt, durch den die erste Kammer 18 mit der zweiten Kammer 24 verbunden wird. Gleichzeitig dichtet der Dichtring 122 den Bewegungsspalt 124 zwischen Drehring 62 und Ringscheibe 42 luftdicht ab. Die über die Druckluftzuführung 144 zugeführte Luft strömt in die durch die Dichtringe 34, 92 und 122 luftdicht abgeschlossene zweite Kammer und gelangt über den hergestellten Öffnungsquerschnitt der Drehdurchführung 27 in die durch den Faltenbalg 44 bzw. durch den Faltenbalgunterbau 118, 120 und durch den Dichtring 116 luftdicht abgeschlossene erste Kammer 18. Von dort aus wird der Druckluftstrom durch den Verbindungskanal 126 in die am Achskörperendbereich 28 ausgebildete Vertiefung 128 geleitet, wobei der mit dem Dichtring 132 bestückte Achskörperdeckel 130 die Vertiefung gegenüber der Umgebung luftdicht abschließt. Über ein am Achskörperdeckel 130 angeordnetes Verbindungsrohr 138 gelangt die Luft schließlich in die sich am Rad 140 befindliche Reifenkammer.

Durch entsprechende Drucksteuerung ist es auch möglich, auf gleiche Betätigungsweise der Drehdurchführung 27 den Druck in der Reifenkammer zu reduzieren. Durch Öffnen der Drehdurchführung 27 kann die Luft auf umgekehrtem Wege aus der Reifenkammer herausströmen, solange die durch die Druckluftzuführung 144 zugeführte Druckluft einen gegenüber dem in der Reifenkammer bzw. ersten Kammer 18 vorherrschenden Druck geringeren Druck aufweist.

Sobald der Ringkolben 60 deaktiviert wird, d. h. sobald der Druck in der Druckkammer 102 absinkt, wird der Ringkolben 60 durch die Druckfeder 76 zurückgestellt, so dass sich zwischen Drehring 62 und Ringscheibe 42 wieder der Bewegungsspalt 124 herstellt und die mit Druckluft beaufschlagte erste Kammer 18 geschlossen wird. Dabei wird die Ringscheibe 42 durch die in der ersten Kammer 18 wirkende Druckkraft auf den Kranz 38 gepresst, so dass der Dichtring 114 zwischen Ringscheibe 42 und Kranz 38 luftdicht abschließt und die Reifenkammer mit der ersten Kammer 18 ein geschlossenen Druckluftkammernsystem bilden.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die im Sinne der nachstehenden Ansprüche unter die vorliegende Erfindung fallen. So kann beispielsweise zur Erhöhung der zur Abdichtung der ersten Kammer benötigten Anpresskraft zusätzlich eine Druckfeder 146 zwischen Ringscheibe 42 und Balganschlussscheibe 48 angeordnet werden, welche die Scheiben 42, 48 über den in der ersten Kammer 18 wirkenden Luftdruck hinaus an die jeweiligen Dichtringe 114, 116 presst.

## Patentansprüche

1. Achsanordnung mit einem feststehenden Achsgehäuse (20), einem im Achsgehäuse (20) gelagerten rotierenden Achskörper (16) und einer den Achskörper (16) umgebenden ersten Kammer (18), wobei die erste Kammer (18) eine mit dem Achskörper (16) rotierende Begrenzungswand (50) mit einer Drehdurchführung (27) aufweist, **dadurch gekennzeichnet dass** die Drehdurchführung (27) einen am Achskörper (16) konzentrisch fixierten Kranz (38) und eine sich radial über den Kranz (38) hinaus erstreckende und den Kranz (38) konzentrisch überlappende Ringscheibe (42) enthält, wobei die Ringscheibe (42) axial verschiebbar und dadurch im Überlappungsbereich (40) zwischen Kranz (38) und Ringscheibe (42) ein Öffnungsquerschnitt herstellbar ist.

2. Achsanordnung nach Anspruch 1, **dadurch gekennzeichnet, dass** am Achsgehäuse (20) ein in axialer Richtung zum Achskörper (16) ausfahrbarer Ringkolben (60) befestigt ist, welcher einen auf dem Ringkolben (60) drehbar gelagerten Drehring (62) aufweist, so dass durch Aktivierung des Ringkolbens (60) der Drehring (62) auf die Ringscheibe (42) aufsetzbar und die axiale Verschiebung der Ringscheibe (42) herstellbar ist, wobei der Drehring (62) im nicht aktivierten Zustand des Ringkolbens (60) berührungslos zur Ringscheibe (42) angeordnet ist.

3. Achsanordnung nach Anspruch 2, **dadurch gekennzeichnet, dass** Anpressmittel enthalten sind, welche die Ringscheibe (42) derart an den Kranz (38) drücken, dass der Ringkolben (60) im aktivierten Zustand entgegen der Anpresskraft des Anpressmittels wirkt.

4. Achsanordnung nach einem der Ansprüche 2 oder 3, **dadurch gekennzeichnet, dass** die Außenwand (58) des Achsgehäuses (20), die Innenwände des Ringkolbens (60) und des Drehrings (62), sowie der Kranz (38) und die Ringscheibe (42) eine zweite Kammer (24) begrenzen, wobei die erste Kammer (18) und die zweite Kammer (24) durch axiale Verschiebung der Ringscheibe (42) miteinander verbindbar sind.

5. Achsanordnung nach einem der Ansprüche 2 bis 4, **dadurch gekennzeichnet, dass** der Ringkolben (60) mit einer Rückstellfeder (76) verbunden ist.

6. Achsanordnung nach einem der Ansprüche 2 bis 5, **dadurch gekennzeichnet, dass** zwischen Kranz (38) und Ringscheibe (42) ein erster Dichtring (114) und/oder zwischen Ringscheibe (42) und Drehring (62) ein zweiter Dichtring (122) angeordnet ist.

7. Achsanordnung nach einem der Ansprüche 2 bis 6, **dadurch gekennzeichnet, dass** zwischen Drehring (62) und Ringkolben (60) ein dritter Dichtring (92) angeordnet ist, der den am Ringkolben (60) drehbar gelagerten Drehring (62) gegenüber dem Ringkolben (60) abdichtet.

8. Achsanordnung nach einem der Ansprüche 2 bis 7, **dadurch gekennzeichnet, dass** der Ringkolben (60) eine Druckluftzuführöffnung (144) für eine Druckluftzufuhr zur zweiten Kammer.(24) enthält.

9. Achsanordnung nach einem der Ansprüche 2 bis 8, **dadurch gekennzeichnet, dass** der Drehring (62) über eine Manschette (84) in axialer Richtung an den Ringkolben (60) fixiert ist.

10. Achsanordnung nach einem der Ansprüche 3 bis 9, **dadurch gekennzeichnet, dass** die erste Kammer (18) in radialer Richtung durch einen Faltenbalg (44) begrenzt ist, der zwischen der Ringscheibe (42) und einer durch die Anpresskraft des Anpressmittels an den Achskörper (20) gepressten Balganschlussscheibe (48) angeordnet ist.

11. Achsanordnung nach Anspruch 10, **dadurch gekennzeichnet, dass** die Begrenzungswand der erste Kammer im Wesentlichen durch den Kranz (38), durch die Ringscheibe (42), durch den Faltenbalg (44), durch die Balganschlussscheibe. (48) und durch den Achskörper (16) ausgebildet ist.

12. Achsanordnung nach einem der Ansprüche 1 bis 11, **dadurch gekennzeichnet, dass** wenigstens ein aus der ersten Kammer (18) durch den Achskörper (16) verlaufender Verbindungskanal (126) enthalten ist, welcher in eine Vertiefung (128) in einem Achskörperendbereich (28) mündet.

13. Achsanordnung nach Anspruch 12, **dadurch gekennzeichnet, dass** am Achskörperendbereich (28) ein mit einer Dichtung versehener Achsdeckel (130) ausgebildet ist, durch welchen die Vertiefung (128) in dem Achskörperendbereich (28) luftdicht abdeckbar ist.

14. Achsanordnung nach Anspruch 12 oder 13, **dadurch gekennzeichnet, dass** außerhalb des Achsdeckels (130) am Achskörperendbereich (28) Bohrungen (142) für den Anschluss eines Rades (140) enthalten sind.

15. Achsanordnung nach Anspruch 14, **dadurch gekennzeichnet, dass** an dem Achsdeckel (130) eine Anschlussstelle (136) für den Anschluss einer in die Vertiefung (128) mündenden Verbindungsleitung (138) zwischen Achsdeckel (130) und Rad (140) ausgebildet ist.

16. Achsanordnung nach einem der Ansprüche 10 bis 15, **dadurch gekennzeichnet, dass** das Anpressmittel eine Druckfeder (146) ist, die zwischen der Ringscheibe (42) und der Balganschlussscheibe (48) einspannbar ist.

17. Achsanordnung nach einem der Ansprüche 3 bis 16, **dadurch gekennzeichnet, dass** das Anpressmittel ein in der ersten Kammer wirkender Luftdruck ist und die Anpresskraft durch den in der ersten Kammer (18) wirkenden Luftdruck erzeugbar ist.

18. Achsanordnung nach einem der Ansprüche 2 bis 17, **dadurch gekennzeichnet, dass** der Ringkolben (60) hydraulisch ansteuerbar ist.

19. Achsanordnung nach einem der Ansprüche 8 bis 18, **dadurch gekennzeichnet, dass** die Druckluftzuführöffnung (144) mit einer Reifendruckregelanlage verbindbar ist.

## Claims

1. Axle assembly with a non-rotating axle housing (20), a rotating axle body (16) mounted in the axle housing (20) and a first chamber (18) surrounding the axle body (16), wherein the first chamber (18) has a defining wall (50) that rotates with the axle body (16) and includes a rotary lead-through (27), **characterized in that** the rotary lead-through (27) includes a ring member (38) secured concentrically to the axle body (16) and an annular disc (42) that extends radially beyond the ring member (38) and overlaps the ring member (38) concentrically, wherein the annular disc (42) is axially displaceable and a cross-sectional opening is producible thereby in the overlapping region (40) between ring member (38) and annular disc (42).

2. Axle assembly according to Claim 1, **characterized in that** an annular piston (60) that is extendible in the axial direction relative to the axle body (16) is secured on the axle housing (20), said annular piston having a rotary ring (62) that is rotatably mounted on the annular piston (60) such that through activation of the annular piston (60), the rotary ring (62) can be placed onto the annular disc (42) and the axial displacement of the annular disc (42) is producible, wherein, in the non-activated state of the annular piston (60), the rotary ring (62) is disposed without any contact with the annular disc (42).

3. Axle assembly according to Claim 2, **characterized in that** pressing means are included, which press the annular disc (42) in such a manner onto the ring member (38) that, in the activated state, the annular piston (60) operates in opposition to the pressing force of the pressing means.

4. Axle assembly according to one of Claims 2 or 3, **characterized in that** the outside wall (58) of the axle housing (20), the inside walls of the annular piston (60) and of the rotary ring (62), the ring member (38) and the annular disc (42) define a second chamber (24), wherein the first chamber (18) and the second chamber (24) are interconnectable through the axial displacement of the annular disc (42).

5. Axle assembly according to one of Claims 2 to 4, **characterized in that** the annular piston (60) is connected to a restoring spring (76).

6. Axle assembly according to one of Claims 2 to 5, **characterized in that** between ring member (38) and annular disc (42) there is a first sealing ring (114) and/or between annular disc (42) and rotary ring (62) there is a second sealing ring (122).

7. Axle assembly according to one of Claims 2 to 6, **characterized in that** between rotary ring (62) and annular piston (60) there is a third sealing ring (92), which seals off the rotary ring (62) that is rotatably mounted at the annular piston (60) from the annular piston (60).

8. Axle assembly according to one of Claims 2 to 7, **characterized in that** the annular piston (60) includes a compressed air supply opening (144) for a compressed air supply to the second chamber (24).

9. Axle assembly according to one of Claims 2 to 8, **characterized in that** the rotary ring (62) is secured to the annular piston (60) in the axial direction by means of a sleeve (84).

10. Axle assembly according to one of Claims 3 to 9, **characterized in that** the first chamber (18) is defined in the radial direction by a bellows (44), which is disposed between the annular disc (42) and a bellows connecting disc (48) that is pressed by the pressing force of the pressing means onto the axle body (20).

11. Axle assembly according to Claim 10, **characterized in that** the defining wall of the first chamber is realized substantially by the ring member (38), by the annular disc (42), by the bellows (44), by the bellows connecting disc (48) and by the axle body (16).

12. Axle assembly according to one of Claims 1 to 11, **characterized in that** there is included at least one connecting channel (126), which extends out of the first chamber (18) through the axle body (16) and opens out into an indentation (128) in an axle body end region (28).

13. Axle assembly according to Claim 12, **characterized in that** an axle cover (130) that is provided with a seal is realized on the axle body end region (28), the indentation (128) in the axle body end region (28) being coverable in an air-tight manner by said axle cover.

14. Axle assembly according to Claim 12 or 13, **characterized in that** bores (142) for the connection of a wheel (140) are included outside the axle cover (130) on the axle body end region (28).

15. Axle assembly according to Claim 14, **characterized in that** a connection point (136) for the connection of a connecting line (138) that opens out into the indentation (128) is realized between axle cover (130) and wheel (140) on the axle cover (130).

16. Axle assembly according to one of Claims 10 to 15, **characterized in that** the pressing means is a compression spring (146), which can be clamped between the annular disc (42) and the bellows connecting disc (48).

17. Axle assembly according to one of Claims 3 to 16, **characterized in that** the pressing means is air pressure operating in the first chamber and the pressing force can be generated by the air pressure operating in the first chamber (18).

18. Axle assembly according to one of Claims 2 to 17, **characterized in that** the annular piston (60) is hydraulically activatable.

19. Axle assembly according to one of Claims 8 to 18, **characterized in that** the compressed air supply opening (144) is connectable to a tyre pressure control system.

## Revendications

1. Arrangement d'essieu comprenant un carter d'essieu (20) fixe, un corps d'essieu (16) logé dans le carter d'essieu (20) de manière à pouvoir tourner et une première chambre (18) qui entoure le corps d'essieu (16), la première chambre (18) présentant une paroi de délimitation (50) munie d'une traversée de rotation (27) qui tourne avec le corps d'essieu (16), **caractérisé en ce que** la traversée de rotation (27) comprend une couronne (38) fixée de manière concentrique sur le corps d'essieu (16) et une plaque annulaire (42) qui s'étend dans le sens radial au-delà de la couronne (38) et qui chevauche la couronne (38) de manière concentrique, la plaque annulaire (42) pouvant se déplacer dans le sens axial et permettant ainsi de réaliser une section transversale d'ouverture dans la zone de chevauchement (40) entre la couronne (38) et la plaque annulaire (42).

2. Arrangement d'essieu selon la revendication 1, **caractérisé en ce qu'**un piston annulaire (60) extractible, qui présente une bague de rotation (62) montée de manière rotative sur le piston annulaire (60), est fixé sur le carter d'essieu (20) dans une direction axiale par rapport au corps d'essieu (16), de telle sorte que l'activation du piston annulaire (60) permet de poser la bague de rotation (62) sur la plaque annulaire (42) et de réaliser le déplacement axial de la plaque annulaire (42), la bague de rotation (62) n'étant pas en contact avec la plaque annulaire (42) lorsque le piston annulaire (60) n'est pas activé.

3. Arrangement d'essieu selon la revendication 2, **caractérisé en ce qu'**il inclut un moyen de compression qui pousse la plaque annulaire (42) contre la couronne (38) de telle sorte que le piston annulaire (60) à l'état actif agit contre la force de pressage du moyen de compression.

4. Arrangement d'essieu selon l'une des revendications 2 ou 3, **caractérisé en ce que** la paroi extérieure (58) du carter d'essieu (20), les parois intérieures du piston annulaire (60) et de la bague de rotation (62) ainsi que la couronne (38) et la plaque annulaire (42) délimitent une deuxième chambre (24), la première chambre (18) et la deuxième chambre (24) pouvant être reliées entre elles par le déplacement axial de la plaque annulaire (42).

5. Arrangement d'essieu selon l'une des revendications 2 à 4, **caractérisé en ce que** le piston annulaire (60) est relié à un ressort de rappel (76).

6. Arrangement d'essieu selon l'une des revendications 2 à 5, **caractérisé en ce qu'**entre la couronne (38) et la plaque annulaire (42) est disposée une première bague d'étanchéité (114) et/ou entre la plaque annulaire (42) et la bague de rotation (62) est disposée une deuxième bague d'étanchéité (122).

7. Arrangement d'essieu selon l'une des revendications 2 à 6, **caractérisé en ce qu'**entre la bague de rotation (62) et le piston annulaire (60) est disposée une troisième bague d'étanchéité (92) qui réalise l'étanchéité par rapport au piston annulaire (60) de la bague de rotation (62) montée de manière rotative sur le piston annulaire (60).

8. Arrangement d'essieu selon l'une des revendications 2 à 7, **caractérisé en ce que** le piston annulaire (60) comprend une ouverture d'acheminement d'air comprimé (144) pour acheminer de l'air comprimé vers la deuxième chambre (24).

9. Arrangement d'essieu selon l'une des revendications 2 à 8, **caractérisé en ce que** la bague de rotation (62) est fixée dans le sens axial sur le piston annulaire (60) par le biais d'une manchette (84).

10. Arrangement d'essieu selon l'une des revendications 3 à 9, **caractérisé en ce que** la première chambre (18) est délimitée par un soufflet (44) dans une première direction, lequel est disposé entre la plaque annulaire (42) et une plaque de terminaison de soufflet (48) comprimée contre le corps d'essieu (20) par la force de pressage du moyen de compression.

11. Arrangement d'essieu selon la revendication 10, **caractérisé en ce que** la paroi de délimitation de la première chambre est formée pour l'essentiel par la couronne (38), par la plaque annulaire (42), par le soufflet (44), par la plaque de terminaison de soufflet (48) et par le corps d'essieu (16).

12. Arrangement d'essieu selon l'une des revendications 1 à 11, **caractérisé en ce qu'**il comprend au moins un canal de liaison (126) qui s'étend hors de la première chambre (18) à travers le corps d'essieu (16) et qui débouche dans un enfoncement (128) dans une zone d'extrémité du corps d'essieu (28).

13. Arrangement d'essieu selon la revendication 12, **caractérisé en ce qu'**un couvercle d'essieu (130) muni d'une garniture d'étanchéité est formé sur la zone d'extrémité du corps d'essieu (28), lequel permet de couvrir hermétiquement l'enfoncement (128) dans la zone d'extrémité du corps d'essieu (28).

14. Arrangement d'essieu selon la revendication 12 ou 13, **caractérisé en ce que** des orifices (142) pour le raccordement d'une roue (140) se trouvent à l'extérieur du couvercle d'essieu (130) sur la zone d'extrémité du corps d'essieu (28).

15. Arrangement d'essieu selon la revendication 14, **caractérisé en ce que** sur le couvercle d'essieu (130) est formé un point de raccordement (136) pour raccorder une conduite de liaison (138) entre le couvercle d'essieu (130) et la roue (140) qui débouche dans 1^{/}enfoncement (128).

16. Arrangement d'essieu selon l'une des revendications 10 à 15, **caractérisé en ce que** le moyen de compression est un ressort presseur (146) qui peut être comprimé entre la plaque annulaire (42) et la plaque de terminaison de soufflet (48).

17. Arrangement d'essieu selon l'une des revendications 3 à 16, **caractérisé en ce que** le moyen de compression est de l'air comprimé qui agit dans la première chambre et la force de pressage peut être produite par la pression d'air qui agit dans la première chambre (18).

18. Arrangement d'essieu selon l'une des revendications 2 à 17, **caractérisé en ce que** le piston annulaire (60) peut être commandé de manière hydraulique.

19. Arrangement d'essieu selon l'une des revendications 8 à 18, **caractérisé en ce que** l'ouverture d'acheminement d'air comprimé (144) peut être reliée avec un équipement de régulation de la pression des pneus.
